(19) Europäisches Patentamt
European Patent Office
Office européen des brevets

(11) **EP 3 957 179 A1**

(12) **EUROPEAN PATENT APPLICATION**
published in accordance with Art. 153(4) EPC

(43) Date of publication:
**23.02.2022 Bulletin 2022/08**

(21) Application number: **19924894.9**

(22) Date of filing: **18.04.2019**

(51) International Patent Classification (IPC):
**A21D 6/00** $^{(2006.01)}$ **A23L 7/10** $^{(2016.01)}$

(52) Cooperative Patent Classification (CPC):
**A21D 6/00; A23L 7/10**

(86) International application number:
**PCT/JP2019/016601**

(87) International publication number:
**WO 2020/213117 (22.10.2020 Gazette 2020/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nisshin Foods Inc.**
**Tokyo 101-8441 (JP)**

(72) Inventors:
• **FUJIMURA, Ryosuke**
  **Tokyo 103-8544 (JP)**
• **ITO, Takashi**
  **Tokyo 103-8544 (JP)**
• **HIWATASHI, Souichiro**
  **Tokyo 103-8544 (JP)**

(74) Representative: **Schiener, Jens**
**Wächtershäuser & Hartz**
**Patentanwaltspartnerschaft mbB**
**Weinstraße 8**
**80333 München (DE)**

(54) **MODIFIED WHEAT FLOUR**

(57) Provided is a modified wheat flour which has good handleability in cooking and provides high-quality food products containing wheat flour. A viscosity of a 10 mass% aqueous suspension of the modified wheat flour is 1,000 mPa·s or less when the aqueous suspension is warmed to 85°C and then cooled to 25°C, and the dispersibility of the aqueous suspension is 90% or less when the aqueous suspension is warmed to 85°C, then cooled to 25°C, and subsequently allowed to stand for 24 hours.

EP 3 957 179 A1

**Description**

Technical Field

The present invention relates to a modified wheat flour.

Background Art

Wheat flour is used as a raw material powder of dough for breads and noodles and batter for deep-fried food products, and as a food material such as a base material for sauces. Further, in the production of dough for breads and noodles, wheat flour is used as a powder for preventing the dough from attaching to the hands and tools. Since wheat flour is likely to be non-uniformly mixed to form crumbs and is likely to be sticky when mixed with water, workability is not necessarily good as a food material. On the other hand, the wheat flour once mixed with water would be better to be used in cooking quickly. Otherwise, the obtained food products may be hardened or have a gritty texture.

Patent Literature 1 describes that a soft wheat flour containing a predetermined amount of powder having a specific particle size has good workability due to less formation of lumps and less scattering of powders. Patent Literature 2 describes that a granulated wheat flour having good workability due to less formation of lumps and less scattering of powders can be obtained by granulating a raw material powder containing wheat flour and water under non-heating conditions. Patent Literature 3 describes that dehydration of wheat flour and subsequent heat treatment at 100°C or more enables obtaining a powder having a non-adhesive property and smooth texture when the wheat flour is heated by being dispersed in water. Patent Literature 4 describes that a modified wheat flour obtained by subjecting a raw material wheat flour to heat-moisture treatment or dry heat treatment having an RVA peak viscosity from 3,500 to 7,000 mPas and a gelatinization onset temperature of at least 10°C lower than that of the raw material wheat flour has good dispersibility in water and good workability and is suitable as a coating for fried food.

Citation List

Patent Literature

Patent Literature 1: JP-A-2014-103860
Patent Literature 2: JP-A-2014-200208
Patent Literature 3: JP-A-2013-76090
Patent Literature 4: WO 2017/135353

Disclosure of the Invention

Technical Problem

The present invention relates to a modified wheat flour which has good workability in cooking and can produce a high-quality food product containing wheat flour.

Solution to Problem

The present invention provides a modified wheat flour, wherein a viscosity of a 10 mass% aqueous suspension of the modified wheat flour is 1,000 mPa·s or less when the aqueous suspension is warmed to 85°C and then cooled to 25°C, and a dispersibility of the aqueous suspension is 90% or less when the aqueous suspension is warmed to 85°C, then cooled to 25°C, and subsequently allowed to stand for 24 hours.

The present invention also provides a method for producing the modified wheat flour, comprising heat treating a wheat flour having a moisture content of from 10 to 14 mass% under sealed conditions at a product temperature of from 70 to 170°C for from 10 to 80 minutes.

Advantageous Effects of Invention

The modified wheat flour of the present invention is suitable as a raw material powder such as dough for breads and noodles and batter for fried foods. The dough and batter produced by using the modified wheat flour of the present invention hardly stick and thus have good workability, and have a good texture when cooked by heating. Since the modified wheat flour of the present invention hardly sticks when being mixed with water, it is suitable as a powder for preventing the dough from attaching to the hands and tools used in the production of the dough for breads and noodles, or as the wheat flour for coating of a foodstuff which is used for the preparation of the foodstuff.

Description of Embodiments

Wheat flour contains crystallized starch particles and enzymes and wheat proteins are present around the starch particles. When wheat flour is heated under the presence of moisture, the starch particles in the wheat flour are swollen and their crystal structures collapse, so that they can retain more moisture. On the other hand, when the wheat flour once heated is cooled, the starch releases the moisture and is recrystallized. This crystal structure formed by recrystallization differs from the crystal structure before heating, and thus the characteristics of the starch are different before and after heating and cooling. When the moisture is present, the protein in the wheat flour changes its structure due to increased hydrogen bonding or hydrolysis, and is irreversibly denatured by heating.

It seemed that the structures and characteristics of the starch and protein contained in wheat flour as well as the changes of the structures and characteristics caused by the addition of moisture to the wheat flour or heating contribute to the characteristics such as the moisture penetration rate and amount of moisture retained of the wheat flour, and the texture of the dough after heating. Thus, the present inventors investigated the behavior of aqueous suspensions of wheat flour under various conditions and examined the relationship between the behavior, and the workability of the wheat flour in cooking and the quality of the food products containing wheat flour after cooking. As a result, the present inventors found that a wheat flour modified such that the viscosity of an aqueous suspension of the wheat flour after heating and then cooling the suspension can be a predetermined value and the dispersibility of the suspension after a predetermined time elapsed from the cooling can be a predetermined value has good workability in cooking and can provide a high-quality food product containing wheat flour with good texture.

Therefore, the present invention provides a modified wheat flour which is suitable for use in food production as a foodstuff and the like. The modified wheat flour of the present invention has the following characteristics when prepared into a 10 mass% aqueous suspension of the modified wheat flour: the viscosity of the aqueous suspension is 1,000 mPa·s or less when the aqueous suspension is warmed to 85°C and then cooled to 25°C, and the dispersibility of the aqueous suspension is 90% or less when the aqueous suspension is warmed to 85°C, then cooled to 25°C, and subsequently allowed to stand for 24 hours.

As used herein, the 10 mass% aqueous suspension of the wheat flour (including modified wheat flour) refers to a suspension containing 10 mass% of the wheat flour obtained by suspending the wheat flour in water. As used herein, the viscosity of the aqueous suspension of the wheat flour is the viscosity of the suspension measured in accordance with the Japanese Industrial Standard JISZ 8803:2011 "Methods for viscosity measurement of liquid" using a rotational viscometer in the conditions of from 12 to 30 rpm. Preferably, the viscosity of the aqueous suspension of the wheat flour measured herein is a value obtained by applying predetermined treatments (heating, cooling, allowing to stand, etc.) to the aqueous suspension of the wheat flour prepared at 25°C, if necessary, and then measuring the viscosity thereof by the above-mentioned means.

In the 10 mass% aqueous suspension of the modified wheat flour of the present invention, the viscosity when the aqueous suspension is warmed to 85°C and then cooled to 25°C is only required to be 1,000 mPa·s or less, preferably 800 mPa·s or less, more preferably 600 mPa·s or less, and further preferably 400 mPa·s or less. With the viscosity more than 1,000 mPa·s, the workability of the modified wheat flour in cooking and the texture of the obtained food product is reduced. In the 10 mass% aqueous suspension of the modified wheat flour of the present invention, the viscosity when the aqueous suspension is warmed to 85°C and then cooled to 25°C is preferred as low as possible, and the lower limit of the viscosity is not particularly limited. Preferably, the viscosity may be below the limit of the measurement using a rotational viscometer by the above measurement method, that is, such a low value that no numerical value can be measured by a rotational viscometer, for example, 10 mPa·s or less.

The dispersibility of the aqueous suspension of wheat flour as used herein refers to a proportion of wheat flour particles dispersed in the suspension (wheat flour particles maintaining a state of being suspended in water without floating or settling). High dispersibility means that the wheat flour particles are easily dispersed in water and separation from water due to floating and sedimentation hardly occurs. The dispersibility of the aqueous suspension of the wheat flour as used herein is a value calculated by the following procedure: the aqueous suspension of the wheat flour is transferred into a container such as a graduated cylinder capable of visually measuring the capacity from outside, which is allowed to stand for a predetermined time, and then the boundary between the turbid part containing the wheat flour and the other transparent part in the suspension is visually measured, the volume of the turbid part is measured based on the boundary, and subsequently, the dispersibility is calculated according to the following equation based on the volume.

$$\text{Dispersibility (\%) = volume of turbid part/total}$$

$$\text{volume} \times 100$$

$$\text{(Total volume = volume of turbid part + volume of}$$

$$\text{transparent part)}$$

Preferably, the dispersibility of the aqueous suspension of the wheat flour measured herein is a value obtained by applying predetermined treatments (heating, cooling, etc.) to the aqueous suspension of the wheat flour prepared at 25°C, if necessary, then allowing to stand for 24 hours, and measuring the dispersibility thereof by the above-mentioned means.

In the 10 mass% aqueous suspension of the modified wheat flour of the present invention, the dispersibility when the aqueous suspension is warmed to 85°C, then cooled to 25°C, and subsequently allowed to stand for 24 hours is only required to be 90% or less, preferably 80% or less, more preferably 70% or less, and further preferably 65% or less. With the dispersibility more than 90%, the workability of the modified wheat flour in cooking and the texture of the obtained food product is reduced. Preferably, in the 10 mass% aqueous suspension of the modified wheat flour of the present invention, the range of the dispersibility when the aqueous suspension is warmed to 85°C, then cooled to 25°C, and subsequently allowed to stand for 24 hours is from 10 to 90%, preferably from 10 to 80%, more preferably from 15 to 70%, and further preferably from 20 to 65%.

The average particle size of the modified wheat flour of the present invention is preferably less than 150 $\mu$m, more preferably from 15 to 120 $\mu$m, and more preferably from 20 to 100 $\mu$m from the viewpoint of obtaining an appearance equivalent to the usual wheat flour. As used herein, the average particle size of the wheat flour refers to a volume average particle size measured by a laser diffraction scattering method. As an apparatus for measuring the average particle size, a commercially available laser diffraction particle size distribution analyzer, for example, Microtrac MT3000 II (NIKKISO CO., LTD.) can be used.

In the modified wheat flour of the present invention, the degree of gelatinization is preferably 12% or less, more preferably 10% or less, and further preferably 9% or less. When the degree of gelatinization of the modified wheat flour is too high, the modified wheat flour mixed with water is likely to be sticky, and the workability in cooking may be reduced. As used herein, the degree of gelatinization of the wheat flour refers to a degree of gelatinization measured by a $\beta$-amylase pullulanase (BAP) method.

The modified wheat flour of the present invention is only required to have a moisture content equivalent to the usual wheat flour. The moisture content of wheat flour in a normal environment (an environment with the humidity from about 20 to 90%) is from about 10 to 14 mass%. Thus, the moisture content of the modified wheat flour is preferably from 10 to 14 mass%, and more preferably from 11 to 13 mass%. As used herein, the moisture content of the wheat flour refers to a value determined from a change in mass of the wheat flour dried at 135°C for 1 hour as compared to that before drying.

The modified wheat flour of the present invention can be produced by subjecting raw material wheat flour to modification treatment in such a treatment condition that the wheat flour after modification may have a viscosity and dispersibility of the above predetermined value. The type of the raw material wheat flour is not particularly limited, and strong wheat flour, medium wheat flour, soft wheat flour, durum flour, and the like can be used. Among them, soft wheat flour is preferred. The moisture content of the raw material wheat flour subjected to the modification treatment is preferably from 10 to 14 mass%, and more preferably from 11 to 13 mass%. If necessary, the raw material wheat flour may be conditioned in advance so that the moisture content can be preferably from 10 to 14 mass%, and more preferably from 11 to 13 mass%. The degree of gelatinization of the raw material wheat flour is not higher than the above-mentioned modified wheat flour of the present invention, and is preferably 12% or less, more preferably 10% or less, and further preferably 9% or less.

Examples of the means for the modification treatment of the raw material wheat flour include heat treatment and chemical treatment. In terms of the remaining of the components such as a reagent in the obtained modified wheat flour, heat treatment is preferred. The heat treatment may be either heat-moisture treatment or dry heat treatment. However, the presence of much moisture upon heat treatment may gelatinize the heat-treated wheat flour and reduce the workability. On the other hand, the loss of moisture of the wheat flour upon heat treatment may cause browning of the wheat flour and thus is not preferred.

Therefore, for the heat treatment for obtaining the modified wheat flour of the present invention, the heat treatment is preferred under such conditions that the modified wheat flour after heating can retain the moisture content equivalent to the raw material wheat flour without excessively increasing or losing the moisture content of the raw material wheat flour during heating. For example, it is preferred to prepare the modified wheat flour having a moisture content of from 10 to 14 mass% by heating raw material wheat flour having a moisture content of from 10 to 14 mass% in an environment in which the moisture is not scattered by evaporation and the like (e.g., sealing). If necessary, heating may be performed while stirring the raw material wheat flour. Preferably, for the heat treatment of the raw material wheat flour, the raw material wheat flour is put into a container capable of sealing vapors (e.g., sealed bag, kiln, capsule) and sealed, and then the raw material wheat flour is heated with the container, preferably while stirring. When the raw material wheat flour is heated under sealed conditions, the moisture evaporated from the wheat flour condensed again in the wheat flour, and thus, the moisture content in the wheat flour after heating is substantially identical to that before heating or only slightly reduced. On the other hand, methods such as directly subjecting the wheat flour to heat wave and hot air, and roasting are not preferred because the moisture of the wheat flour is evaporated and removed. The raw material wheat flour is preferably heated without adding moisture other than the moisture inherent in the raw material wheat flour upon heating of the raw material wheat flour. However, as long as the moisture amount of the modified wheat flour after heating is maintained within the above-mentioned range, the addition of moisture to the raw material wheat flour is acceptable.

In the heat treatment, the temperature of the heating is only required to be from 70 to 170°C, preferably from 80 to 150°C, more preferably from 90 to 140°C, and further preferably from 90 to 130°C, as the product temperature of the wheat flour. The time of the heating is only required to be for from 10 to 80 minutes, preferably from 15 to 70 minutes, more preferably from 15 to 65 minutes, further preferably from 15 to 60 minutes, further preferably from 20 to 60 minutes, and further preferably from 30 to 60 minutes. The heat treatment under the sealed conditions described above can be carried out using, for example, a commercially available sealed heated mixing apparatus (for example, a rocking dryer manufactured by AICHI ELECTRIC CO.,LTD.).

When the raw material wheat flour is heated in a presence of water upon heating of the raw material wheat flour, the degree of gelatinization may be increased. Thus, the heating temperature and moisture content of the raw material wheat flour are preferably adjusted such that the degree of gelatinization of the wheat flour after heating falls within a range of the degree of gelatinization of the above-mentioned modified wheat flour of the present invention, upon heat treatment of the aforementioned raw material wheat flour.

If necessary, preparation may be performed by grinding or classifying the obtained wheat flour after heating to have the above-mentioned average particle size of the modified wheat flour of the present invention. However, in the aforementioned heat treatment for obtaining the modified wheat flour of the present invention, wheat flours are hardly granulated sticking to each other, and thus the grinding or the classification is basically not required.

In the food production, the modified wheat flour of the present invention can be used in a similar manner as the usual wheat flour which is not modified. Since the modified wheat flour of the present invention has high dispersibility in water and is not likely to become viscous when mixed with water, the stickiness to the hands of a cooker, tools and foodstuffs is suppressed upon using the modified wheat flour in the food production, exhibiting good workability. The dough and batter obtained using the modified wheat flour of the present invention hardly stick and thus have good workability, and has a good texture after being cooked by heating. For example, the modified wheat flour of the present invention can be used as the raw material powder of the dough for bakery products such as bread, cake, and cookie, and the dough for noodles and pasta. Also, the modified wheat flour of the present invention can be used as, for example, the raw material powder of the batter for fried foods such as tempura and karaage, or a base material of sauces, soups, creams, and fillings. Alternatively, the modified wheat flour of the present invention can be used as a powder for preventing wheat flour dough from attaching to the hands and tools, or in preparation of a foodstuff before cooking with heat (e.g., fresh foods before frying), as a coating for the foodstuff.

A composition containing the modified wheat flour of the present invention and other components may be provided. Preferably, the composition is provided as a premix for producing dough for bakery products, noodles, pasta, and the like, and batter for fried foods. The components other than the modified wheat flour of the present invention contained in the composition may be appropriately selected according to the purpose of the composition, and examples thereof include, but are not limited to, cereal flours other than the modified wheat flour of the present invention, starches, and other raw materials such as proteins such as gluten; egg powder and egg white powder; milk components; fats and oils; saccharides such as dextrin, starch syrup, and sugar alcohol; salts; seasonings; leavening agents; emulsifying agents; thickening agents; and enzymes. Examples of the cereal flours other than the modified wheat flour of the present invention include wheat flours other than the modified wheat flour such as wheat flours not subjected to modification treatment, dry heat-treated wheat flour, and gelatinized wheat flour; barley flour, rye flour, rice flour, corn flour, sorghum flour, and soybean flour. Examples of the starches include starches such as potato starch, tapioca starch, corn starch, waxy corn starch, and wheat flour starch; and modified starches thereof (gelatinized starch, etherified starch, esterified starch, acetylated starch, and crosslinked starch). The composition containing the modified wheat flour of the present invention may contain any one component selected from the group consisting of the cereal flours other than the modified wheat flour of the present invention, starches, and other raw materials mentioned above alone or may contain any two or more thereof.

Examples

Next, the present invention will be described further specifically by way of examples, but the present invention is not limited only to the following examples.

Reference Example 1

In the following examples, the viscosity and the dispersibility of the wheat flour were measured by the following methods.

[Measurement of viscosity of wheat flour]

50 g of wheat flour was put in a small pot whose tare was measured, 450 mL of water at 25°C was added thereto, and then the mixture was stirred with a stirrer until uniformly dispersed to obtain an entirely uniform dispersion liquid. Water was added to the dispersion liquid until the mass of the small pot whose tare was subtracted reached 500 g, and the mixture was entirely uniformly stirred. The small pot was heated and the product temperature was warmed to 85°C while stirring the dispersion liquid. After the temperature was reached 85°C, the small pot was put in an ice bath, and the dispersion liquid was cooled to 25°C. Subsequently, to compensate for the evaporated moisture, water (25°C) was added to the dispersion liquid until the mass of the small pot whose tare was subtracted reached 500 g, and the mixture was entirely uniformly stirred. The viscosity of the obtained dispersion liquid was measured using a B-type viscometer in the conditions of 25°C and from 12 to 30 rpm.

[Measurement of dispersibility of wheat flour]

50 g of wheat flour was put in a small pot whose tare was measured, 450 mL of water at 25°C was added thereto, and then the mixture was stirred with a stirrer until uniformly dispersed to obtain an entirely uniform dispersion liquid. Water was added to the dispersion liquid until the mass of the small pot whose tare was subtracted reached 500 g, and the mixture was entirely uniformly stirred. The small pot was heated and the product temperature was warmed to 85°C while stirring the dispersion liquid. After the temperature was reached 85°C, the small pot was put in an ice bath, and the dispersion liquid was cooled to 25°C. Subsequently, to compensate for the evaporated moisture, water (25°C) was added to the dispersion liquid until the mass of the small pot whose tare was subtracted reached 500 g, and the mixture was entirely uniformly stirred. 100 mL of the obtained dispersion liquid was poured into a 100 mL graduated cylinder, the opening of the graduated cylinder was sealed, followed by allowing the graduated cylinder to stand at 25°C for 24 hours. The boundary between the turbid part containing the wheat flour and the other transparent part of the dispersion liquid after 24 hours was visually measured, and the volume of each part was measured. The dispersibility of the dispersion liquid was calculated based on the following equation.

$$\text{Dispersibility } (\%) = \text{volume of turbid part (mL)}/100 \text{ mL} \times 100$$

Test Example 1

1. Production of modified wheat flours

Heat treated wheat flours were produced by the following procedure. A soft wheat flour having a moisture content of 13 mass% (manufactured by Nisshin Foods Inc.) (degree of gelatinization: 4) was used as the raw material wheat flour.

[Production Examples 1 to 3]

The raw material wheat flour was heated using a sealed heated mixing apparatus (rocking dryer manufactured by AICHI ELECTRIC CO.,LTD.) under the following conditions: at 90°C for 60 minutes (Production Example 1), at 110°C for 30 minutes (Production Example 2), or at 130°C for 60 minutes (Production Example 3). The moisture content of each wheat flour after the end of heating was about 12 mass% and the degree of gelatinization thereof was in a range from 9 to 12. The viscosity and the dispersibility of each wheat flour after heating were measured by the method of Reference Example 1.

[Comparative Examples 1 to 2]

The raw material wheat flour was accommodated in a retort pouch bag to have a plate shape having a thickness of about 5 mm, and the opening thereof was sealed, followed by heating at 60°C for 1 minute (Comparative Example 1) or 6 minutes (Comparative Example 2). The moisture content of each wheat flour after heating was 13 mass% and the degree of gelatinization thereof was in a range from 4 to 6. The viscosity and the dispersibility of each wheat flour after heating were measured by the method of Reference Example 1.

[Comparative Examples 3 to 4]

15 mass% of water with respect to the mass of the wheat flour was added to the raw material wheat flour, and the mixture was sealed in a heat-resistant sealed container. This container was heated in an oil bath at 110°C for 2 minutes (Comparative Example 3) or at 110°C for 30 minutes (Comparative Example 4). The moisture content of each wheat flour after heating was 27 mass% and the degree of gelatinization thereof was 60 or more. The viscosity and the dispersibility of each wheat flour after heating were measured by the method of Reference Example 1.

[Comparative Example 5]

The raw material wheat flour was put in a small pot, and the pot was placed on an electric stove and stirred for 30 minutes so as not to burn the wheat flour while heating at about 120°C. The moisture content in the wheat flour after heating was 4 mass% and the degree of gelatinization thereof was 9. The viscosity and the dispersibility of the wheat flour after heating were measured by the method of Reference Example 1.

2. Production of tonkatsu

Tonkatsu was produced using the modified wheat flour obtained in the above 1. The modified wheat flour was attached to the whole surface of pork loin (thickness: 8 mm, 120 g) on a dish on which the modified wheat flour was spread out. The meat to which the wheat flour was attached was dipped in whole egg liquid, and the same modified wheat flour was attached to the whole surface again. This was dipped in the whole egg liquid again, and subsequently, bread crumbs were attached to the whole surface on a dish on which bread crumbs were spread out to produce meat for tonkatsu. These operations were repeated three times without wiping the hands in the middle, thereby producing three pieces of meat for tonkatsu. The workability of these operations was evaluated by the following evaluation criteria. Then, the produced meat for tonkatsu was fried in oil at 170°C to produce tonkatsu. The obtained tonkatsu was allowed to stand at room temperature for 6 hours, and then the coating was peeled off and the texture of the coating was evaluated by the following evaluation criteria.
The workability and the texture of the coating were evaluated by 10 professional panelists, and the mean values of the evaluation results of 10 panelists were determined. The results are shown in Table 1. Table 1 also shows the results of the raw material wheat flour evaluated in a similar manner as a reference.

Evaluation criteria

[Workability]

5: Batter is uniformly attached to the surface of the meat, less attachment of batter to the hands, and workability is very good.
4: Batter is almost uniformly attached to the surface of the meat, less attachment of batter to the hands, and workability is good.
3: Batter becomes lumps on the surface of the meat and is non-uniformly attached thereto, and the excess batter is likely attached to the hands.
2: Batter becomes clayey and sticks to the hands, and workability is poor.
1: Batter becomes clayey and much amount thereof sticks to the hands, and workability is very poor.

[Texture of coating]

5: The inner side of the coating is fluffy, and the surface is very crispy.

4: The inner side of the coating is fluffy, and the surface is crispy.

3: The inner side of the coating is slightly sticky, but the surface is crispy.

2: The inner side of the coating is somewhat sticky, and the crispness of the surface is not satisfactory.

1: The inner side of the coating is sticky, and there is almost no crispness of the surface.

[Table 1]

| | | Production Example | | | Comparative Example | | | | | Reference |
|---|---|---|---|---|---|---|---|---|---|---|
| | | 1 | 2 | 3 | 1 | 2 | 3 | 4 | 5 | |
| Heating | | | | | | | | | | |
| | Temperature (°C) | 90 | 110 | 130 | 60 | 60 | 110 | 110 | 120 | - |
| | Time (minutes) | 60 | 30 | 60 | 1 | 6 | 2 | 30 | 30 | - |
| Modified wheat flour | | | | | | | | | | |
| | Moisture content (%) | 12 | 12 | 12 | 13 | 13 | 27 | 27 | 4 | 13 |
| | Viscosity (mPa·s) | ≤10 | ≤10 | ≤10 | 3570 | 3750 | 2630 | 4390 | 1200 | 3230 |
| | Dispersibility (%) | 75 | 66 | 62 | 100 | 100 | 100 | 100 | 80 | 100 |
| Evaluation | | | | | | | | | | |
| | Workability | 4.1 | 4.4 | 4.4 | 2.7 | 2.8 | 2.4 | 1.9 | 3.0 | 1.5 |
| | Texture of coating | 4.3 | 4.5 | 4.5 | 3.0 | 3.0 | 3.6 | 3.3 | 2.3 | 1.6 |

Test Example 2

Each modified wheat flour was produced in a similar procedure as Production Example 1 of Test Example 1 except that the heating temperature and time were variously changed as shown in Table 2, and the viscosity and the dispersibility were measured using the method of Reference Example 1. Each obtained modified wheat flour was used to produce each tonkatsu in a similar procedure as in Test Example 1, and the workability and the texture of the coating were evaluated. The results are shown in Table 2.

[Table 2]

| | Production Example | | | | | | | Comparative Example | | | |
|---|---|---|---|---|---|---|---|---|---|---|---|
| | 4 | 5 | 6 | 7 | 8 | 9 | 10 | 6 | 7 | 8 | 9 |
| Heating | | | | | | | | | | | |
| Temperature (°C) | 130 | 110 | 110 | 90 | 90 | 90 | 90 | 90 | 90 | 110 | 130 |
| Time (minutes) | 50 | 24 | 21 | 30 | 22 | 19 | 15 | 9 | 6 | 9 | 9 |
| Modified wheat flour | | | | | | | | | | | |
| Moisture content (%) | 12 | 12 | 12 | 12 | 13 | 13 | 13 | 13 | 13 | 13 | 13 |
| Viscosity (mPa·s) | ≤10 | 220 | 440 | 660 | 790 | 930 | 950 | 980 | 2030 | 1050 | 1240 |
| Dispersibility (%) | 52 | 68 | 78 | 80 | 80 | 82 | 88 | 92 | 93 | 88 | 87 |
| Evaluation | | | | | | | | | | | |
| Workability | 4.7 | 4.5 | 4.4 | 4.3 | 4.3 | 4.0 | 4.2 | 2.7 | 2.5 | 3.7 | 3.5 |
| Texture of coating | 4.4 | 4.5 | 4.5 | 4.3 | 4.2 | 3.9 | 4.1 | 2.8 | 2.2 | 3.3 | 3.3 |

**Claims**

1.  A modified wheat flour, wherein a viscosity of a 10 mass% aqueous suspension of the modified wheat flour is 1,000 mPa·s or less when the aqueous suspension is warmed to 85°C and then cooled to 25°C, and a dispersibility of the aqueous suspension is 90% or less when the aqueous suspension is warmed to 85°C, then cooled to 25°C, and subsequently allowed to stand for 24 hours.

2. The modified wheat flour according to claim 1,
   wherein the viscosity is 800 mPa·s or less and the dispersibility is from 10 to 80%.

3. The modified wheat flour according to claim 1 or 2, which has a moisture content of from 10 to 14 mass%.

4. The modified wheat flour according to any one of claims 1 to 3, which has a degree of gelatinization of 12% or less.

5. A method for producing the modified wheat flour according to any one of claims 1 to 4, comprising subjecting a wheat flour having a moisture content of from 10 to 14 mass% to heat treatment under sealed conditions at a product temperature of from 70 to 170°C for from 10 to 80 minutes.

# EP 3 957 179 A1

<table>
<tr><td colspan="2" align="center"><b>INTERNATIONAL SEARCH REPORT</b></td><td>International application No.<br>PCT/JP2019/016601</td></tr>
</table>

**A. CLASSIFICATION OF SUBJECT MATTER**
Int. Cl. A21D6/00(2006.01)i, A23L7/10(2016.01)i

According to International Patent Classification (IPC) or to both national classification and IPC

**B. FIELDS SEARCHED**

Minimum documentation searched (classification system followed by classification symbols)
Int. Cl. A21D6/00, A23L7/10

Documentation searched other than minimum documentation to the extent that such documents are included in the fields searched
Published examined utility model applications of Japan     1922-1996
Published unexamined utility model applications of Japan   1971-2019
Registered utility model specifications of Japan           1996-2019
Published registered utility model applications of Japan   1994-2019

Electronic data base consulted during the international search (name of data base and, where practicable, search terms used)
JSTPlus/JMEDPlus/JST7580 (JDreamIII), AGRICOLA/CAplus/FSTA/WPIDS (STN)

**C. DOCUMENTS CONSIDERED TO BE RELEVANT**

| Category* | Citation of document, with indication, where appropriate, of the relevant passages | Relevant to claim No. |
|---|---|---|
| Y | WO 2017/135353 A1 (NISSHIN FOODS INC.), 10 August 2017, claims 1-6, paragraphs [0001], [0013], [0019], [0024]-[0028], [0031]-[0033], examples 1-6 & US 2019/0014801 A1, paragraphs [0001], [0014], [0026], [0031], [0032], [0036]-[0038], examples 1-6 & EP 3412155 A1 & CN 108430234 A | 1-5 |
| Y | JP 2010-233540 A (NISSHIN FOODS INC.) 21 October 2010, claims 1-4, paragraphs [0001], [0002], [0004], [0010], [0024]-[0028] (Family: none) | 1-5 |

☒ Further documents are listed in the continuation of Box C.          ☐ See patent family annex.

| | |
|---|---|
| *   Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>24.06.2019 | Date of mailing of the international search report<br>09.07.2019 |
|---|---|
| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

**INTERNATIONAL SEARCH REPORT**

| International application No. |
| --- |
| PCT/JP2019/016601 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | 香川芳子, 「七訂食品成分表 2016」, Kagawa Nutrition University Publishing Division, 01 April 2016, pp. 6-9 ("Flour" 01015-01023), non-official translation (KAGAWA, Yoshiko. Food Composition Table 2016.) | 1-5 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014103860 A
- JP 2014200208 A
- JP 2013076090 A
- WO 2017135353 A